# EUROPÄISCHE PATENTSCHRIFT

(11) **EP 2 168 780 B1**
(45) Veröffentlichungstag und Bekanntmachung des Hinweises auf die Patenterteilung: **17.02.2016**
(21) Anmeldenummer: 09011426.5
(22) Anmeldetag: 07.09.2009
(51) Int. Cl.: B41M 3/14, B41M 5/24, B41M 5/46, B42D 25/41, B42D 25/29, B41M 5/28, C09D 7/00, C09D 11/50, D21H 21/40

(54) **Sicherheitsmerkmal zur Absicherung von Wertgegenständen**
Safety marker for securing valuable objects
Caractéristique de sécurité pour la sécurisation d'objets de valeur

(30) Priorität: 29.09.2008 DE 102008049511
(43) Veröffentlichungstag der Anmeldung: 31.03.2010
(73) Patentinhaber: Giesecke & Devrient GmbH, 81677 München (DE)
(72) Erfinder: Schiffmann, Peter, 85354 Freising (DE); Otto, Daniela, Dr., 81669 München (DE)

(56) Entgegenhaltungen:
- EP-A1- 0 980 763
- EP-A2- 1 826 728

## Beschreibung

Die Erfindung betrifft ein Sicherheitsmerkmal zur Absicherung von Wertgegenständen und betrifft dabei insbesondere Kern-Hülle-Teilchen zur Einbettung in einen bindemittelhaltigen Markierungsstoff für den Sicherheitsdruck, die einen Kern mit einem Infrarot-Absorber und eine den Kern umgebende Hülle aufweisen. Die Erfindung betrifft ferner ein Verfahren zur Herstellung derartiger Kern-Hülle-Teilchen, ein lasermarkierbares Sicherheitsmerkmal und ein lasermarkierbares Sicherheitselement zur Absicherung von Wertgegenständen, ein Verfahren zur Herstellung eines lasermarkierten Sicherheitselements sowie ein Sicherheitspapier und einen Datenträger mit einem solchen Sicherheitsmerkmal oder einem solchen Sicherheitselement.

Datenträger, wie Wert- oder Ausweisdokumente, oder auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Derartige Sicherheitselemente können beispielsweise in Form eines in eine Banknote eingebetteten Sicherheitsfadens, eines Aufreißfadens für Produktverpackungen, eines aufgebrachten Sicherheitsstreifens oder eines selbsttragenden Transferelements ausgebildet sein, wie einem Patch oder einem Etikett, das nach seiner Herstellung auf ein Wertdokument aufgebracht wird.

Zur individuellen Markierung der Sicherheitselemente werden Laserbeschrifter, beispielsweise auf Basis von CO₂-Lasern, Nd:YAG-Lasern oder UV-Lasern genutzt. Je nach der Wellenlänge des verwendeten Markierungslasers bestehen jedoch Einschränkungen bezüglich der einsetzbaren lasermarkierbaren Markierungsstoffe. Beispielsweise sind die derzeit verwendeten Lumineszenzstoffe und viele IR-Absorber, die im Bereich unterhalb von 1000 nm oder oberhalb von 1300 nm absorbieren, mit Nd:YAG-Lasern nicht markierbar.

Eine größere Palette von lasermarkierbaren Markierungsstoffen kann zur Verfügung gestellt werden, wenn Markierungsstoffe in Betracht gezogen werden, in denen Kern-Hülle-Teilchen mit einem Kern und einer den Kern umgebenden Hülle eingebettet sind, wobei lediglich eines der Materialien von Kern und Hülle die Strahlung des Laserbeschrifters absorbiert.

Die Druckschrift EP 1 826 728 A2 schlägt hierzu ein Sicherheitselement mit einem lasermarkierbaren Markierungsstoff mit Kern-Hülle-Teilchen vor, bei dem der Kern die Strahlung eines Markierungslasers absorbiert, während die Hülle die Strahlung des Markierungslasers nicht absorbiert und beispielsweise durch ein Buntpigment oder einen Lumineszenzstoff gebildet ist. Unter bestimmten Umständen gelingt bei der Lasermarkierung solcher Markierungsstoffe die Ablation der Kern-Hülle-Teilchen aus dem Markierungsstoff jedoch nur unvollständig, so dass eine unvollständige Markierung des Sicherheitselements, d.h. des Markierungsstoffs, entsteht.

Ausgehend davon liegt der Erfindung die Aufgabe zugrunde, ein Sicherheitsmerkmal mit Kern-Hülle-Teilchen zur Absicherung von Wertgegenständen der eingangs genannten Art anzugeben, das die Nachteile des Standes der Technik vermeidet. Insbesondere soll eine möglichst vollständige Entfernung der Kern-Hülle-Teilchen aus dem Markierungsstoff bei der Laserbeschriftung sichergestellt werden.

Diese Aufgabe wird durch das Kern-Hülle-Teilchen mit den Merkmalen des Hauptanspruchs gelöst. Ein Verfahren zum Herstellen eines solchen Kern-Hülle-Teilchens, ein Sicherheitsmerkmal, ein Sicherheitselement, ein Verfahren zur Herstellung eines lasermarkierten Sicherheitselements, ein Sicherheitspapier sowie ein Datenträger mit einem solchen Sicherheitsmerkmal oder einem solchen Sicherheitselement sind in den nebengeordneten Ansprüchen angegeben. Weiterbildungen der Erfindung sind Gegenstand der abhängigen Ansprüche.

Gemäß der Erfindung enthält die Hülle eines gattungsgemäßen Kern-Hülle-Teilchens einen sublimationsfähigen Bunt- oder Lumineszenzstoff mit einer Sublimationstemperatur von weniger als 220 °C. Die Hülle kann grundsätzlich auch einen sublimationsfähigen Stoff mit einer Sublimationstemperatur von weniger als 220 °C enthalten, bei dem es sich um einen Bunt- und Lumineszenzstoff handelt. Die weiteren Ausführungen zu Buntstoffen und Lumineszenzstoffen schließen daher in der Regel auch Stoffe ein, bei denen es sich sowohl um Buntstoffe als auch um Lumineszenzstoffe handelt. Als sublimationsfähige Bunt- oder Lumineszenzstoffe kommen dabei sowohl Pigmente als auch Farbstoffe infrage, wobei der begriffliche Unterschied von Pigmenten und Farbstoffen dem Fachmann bekannt ist. Im Rahmen der vorliegenden Erfindung umfasst der Begriff "Hülle" auch eine aus mehreren Schichten aufgebaute Hülle.

Der Bunt- und/ oder Lumineszenzstoff weist mit Vorteil eine hohe Lichtechtheit und/ oder eine hohe chemische Beständigkeit auf. Die Lichtechtheit ist ein Maß für die Farbechtheit von Färbungen, Farbstoffen und Drucken gegen die Bleichwirkung des Tageslichts, wie sie einschließlich geeigneter Messverfahren in der europäischen Norm EN ISO 105 B01 definiert ist. Bevorzugt weist der Bunt- oder Lumineszenzstoff auf der 8-stufigen Wollskala eine Lichtechtheit von 3 oder mehr, vorzugsweise sogar von 5 oder mehr, auf.

Die Sublimationstemperatur des Bunt- und/ oder Lumineszenzstoffs liegt vorzugsweise zwischen 100 °C und 200 °C, besonders bevorzugt zwischen 120 °C und 150 °C. Einige nicht beschränkende Beispiele geeigneter Bunt- oder Lumineszenzstoffe sind weiter unten angegeben.

In einer vorteilhaften Weiterbildung der Erfindung ist die Hülle des Kern-Hülle-Teilchens von einer ablationsfördernden Funktionsschicht umgeben, die bei Bestrahlung des in einen bindemittelhaltigen Markierungsstoff eingebetteten Kern-Hülle-Teilchens mit einem Markierungslaser die Bindungsstärke zwischen dem Kern-Hülle-Teilchen und dem einbettenden Bindemittel reduziert, um die laserinduzierte Entfernung des Kern-Hülle-Teilchens aus dem Markierungsstoff zu fördern. In einer weiteren Erfindungsvariante weist die Funktionsschicht Materialien mit hydrophilen Gruppen auf, um eine verbesserte Benetzung der Funktionsschicht in dem einbettenden Bindemittel eines Markierungsstoffs zu gewährleisten.

Des Weiteren ist in einer bevorzugten Erfindungsvariante vorgesehen, dass die Hülle der Kern-Hülle-Teilchen einen Bunt- und/oder Lumineszenzstoff, insbesondere ein Bunt- und/oder Lumineszenzpigment, enthält. Dabei können die mit Bezug auf den Kern bzw. die Hülle des erfindungsgemäßen Kern-Hülle-Teilchens weiter oben bzw. weiter unten beschriebenen Bunt-/ Lumineszenzstoffe bzw. Bunt-/Lumineszenzpigmente auch in der Funktionsschicht des Kern-Hülle-Teilchens enthalten sein.

In einer besonders bevorzugten Ausgestaltung ist der Markierungsstoff, in den das lasersensitive Kern-Hülle-Teilchen eingebettet ist, für die Anwendung im Sicherheitsdruck ausgelegt, wobei es sich insbesondere um eine im Offsetdruck, Flexodruck, Siebdruck oder Stichdruckverfahren applizierbare Druckfarbe, Beschichtung oder Lack handeln kann.

In einer vorteilhaften Erfindungsvariante ist die Funktionsschicht aus einem verdampfungsfähigen oder sublimationsfähigen Material mit einer Verdampfungs- bzw. Sublimationstemperatur von weniger als 250 °C, bevorzugt von weniger als 200 °C, besonders bevorzugt von weniger als 150 °C gebildet. Nach weiteren Erfindungsvarianten ist die Funktionsschicht aus einer mit einer niedrigsiedenden Flüssigkeit gefüllten Polymerkapsel, beziehungsweise aus einer gasgefüllten Polymerkapsel gebildet, wobei die Polymerkapsel, wie weiter unten näher beschrieben, bei Beaufschlagung des Absorbers des Kern-Hülle-Teilchens mit Laserstrahlung letztlich zerstört wird.

Zur Erhöhung der Fälschungssicherheit der erfindungsgemäßen Kern-Hülle-Teilchen bzw. der diese enthaltenden Markierungsschichten kann die Polymerkapsel zusätzlich Bunt- oder Lumineszenzstoffe enthalten, die nicht im Bereich der eingesetzten Laserstrahlung absorbieren, die aber insbesondere maschinell detektierbar sind und somit ein weiteres Echtheitsmerkmal darstellen.

Zur Stabilisierung des Kern-Hülle-Teilchens kann zwischen dem Kern und der Hülle und/ oder zwischen der Hülle und der Funktionsschicht eine organische oder anorganische Schicht, beispielsweise eine SiOₓ-Schicht, angeordnet sein.

Die Erfindung enthält auch ein Verfahren zur Herstellung eines Kern-Hülle-Teilchens, bei dem ein erstes Material, das einen Infrarot-Absorber enthält, mit einem zweiten Material, das einen sublimationsfähigen Bunt- und/oder Lumineszenzstoff enthält, verkapselt wird. Die Sublimationstemperatur des Bunt- und/ oder Lumineszenzstoffs liegt dabei unterhalb von 220 °C. In einer vorteilhaften Weiterbildung wird das durch diese Verkapselung erhaltene "bloße" Kern-Hülle-Teilchen mit einer ablationsfördernden Funktionsschicht umgeben, die bei Bestrahlung des in einen bindemittelhaltigen Markierungsstoff eingebetteten Kern-Hülle-Teilchens mit einem Markierungslaser die Bindungsstärke zwischen dem Kern-Hülle-Teilchen und dem einbettenden Bindemittel reduziert, um die laserinduzierte Entfernung des Kern-Hülle-Teilchens aus dem Markierungsstoff zu fördern. Im Rahmen der vorliegenden Erfindung wird unter "Verkapseln" ganz allgemein das Beschichten eines ersten Materials mit einem zweiten Material verstanden, also z.B. das Beschichten des Kerns des Kern-Hülle-Teilchens mit einer Hülle.

Um das bloße Kern-Hülle-Teilchen mit einer Polymerkapsel zu versehen, die mit einer niedrigsiedenden Flüssigkeit oder einem Gas gefüllt ist, kommt insbesondere ein Verfahren aus der Gruppe Koarzervierung, Polymerisation/ Polykondensation, in-situ-Polymerisation, Emulsion-Diffusion-Technik und Miniemulsions-Polymerisation zur Anwendung, wobei grundsätzlich auch andere gängige Verfahren eingesetzt werden können.

Gemäß der Erfindung enthält ein lasermarkierbares Sicherheitsmerkmal zur Absicherung von Wertgegenständen einen lasermarkierbaren Markierungsstoff mit Kern-Hülle-Teilchen der oben beschriebenen Art, also mit Kern-Hülle-Teilchen, deren Hülle einen sublimationsfähigen Bunt- und/ oder Lumineszenzstoff mit einer Sublimationstemperatur von weniger als 220 °C enthält und die gegebenenfalls zusätzlich mit einer ablationsfördernden Funktionsschicht umgeben sind.

Ein lasermarkierbares Sicherheitselement umfasst vorteilhafterweise ein derartiges lasermarkierbares Sicherheitsmerkmal, das auf einem Substrat angeordnet ist. Mit Vorteil kann eine Hilfsschicht zwischen dem Substrat und dem lasermarkierbaren Sicherheitsmerkmal angeordnet sein, die die Bindungsstärke zwischen den Kern-Hülle-Teilchen des lasermarkierbaren Markierungsstoffs und dem Substrat reduziert.

Die Erfindung umfasst weiterhin ein Verfahren zur Herstellung eines lasermarkierten Sicherheitselements, bei dem das beschriebene lasermarkierbare Sicherheitsmerkmal auf ein Substrat aufgebracht und in einem Markierungsbereich mit Strahlung des Markierungslasers beaufschlagt wird, um in dem Markierungsbereich die Kern-Hülle-Teilchen aus dem Markierungsstoff zu entfernen. Vor dem Aufbringen des lasermarkierbaren Sicherheitsmerkmals kann eine Hilfsschicht nach einer der weiter unten beschriebenen Ausgestaltungen auf das Substrat aufgebracht werden, die die Bindungsstärke zwischen den Kern-Hülle-Teilchen des lasermarkierbaren Markierungsstoffs und dem Substrat reduziert. Die Hilfsschicht kann mit Vorteil mittels Flexodruck, Siebdruck oder Offsetdruck auf das Substrat aufgebracht werden. Zur Herstellung des lasermarkierten Sicherheitselements wird das lasermarkierbare Sicherheitsmerkmal bevorzugt mit Laserstrahlung im Nahinfrarot, insbesondere bei Wellenlängen von etwa 1,06 µm beaufschlagt. Zur Markierung können dann Nd:YAG-Laser oder verwandte Lasertypen, wie Nd:Glas- oder Nd:YVO4-Laser, eingesetzt werden.

Ein Sicherheitspapier für die Herstellung von Sicherheits- oder Wertdokumenten, wie Banknoten, Schecks, Ausweiskarten, Urkunden oder dergleichen, ist vorzugsweise mit einem lasermarkierbaren Sicherheitsmerkmal der oben beschriebenen Art oder mit einem lasermarkierbaren Sicherheitselement der oben beschriebenen Art ausgestattet. Das Sicherheitspapier kann dabei ein Trägersubstrat aus Papier oder Kunststoff umfassen. Grundsätzlich ist anzumerken, dass als Substratmaterial für die Aufbringung des Sicherheitsmerkmals bzw. Sicherheitselements jede Art von Papier in Betracht kommt, insbesondere Baumwollpapier. Selbstverständlich kann auch Papier eingesetzt werden, welches einen Anteil x polymeren Materials im Bereich von 0 < x < 100 Gew.-% enthält.

Weiterhin ist es grundsätzlich denkbar, wenn auch gegenwärtig nicht bevorzugt, dass das Substratmaterial des Datenträgers eine Kunststofffolie, z. B. eine Polyesterfolie, ist. Die Folie kann ferner monoaxial oder biaxial gereckt sein. Die Reckung der Folie führt unter anderem dazu, dass sie polarisierende Eigenschaften erhält, die als weiteres Sicherheitsmerkmal genutzt werden können.

Zweckmäßig kann es auch sein, wenn das Substratmaterial ein mehrschichtiger Verbund ist, der wenigstens eine Schicht aus Papier oder einem papierartigen Material aufweist. Ein solcher Verbund zeichnet sich durch eine außerordentlich große Stabilität aus, was für die Haltbarkeit des Substrats bzw. Datenträgers von großem Vorteil ist.

Denkbar ist aber auch, als Substratmaterial ein mehrschichtiges, papierfreies Kompositmaterial einzusetzen, was vor allem bei Ausweis- und Kreditkarten sehr vorteilhaft ist. Diese Materialien können insbesondere in bestimmten Klimaregionen der Erde mit Vorteil eingesetzt werden.

Alle als Substratmaterial eingesetzten Materialien können Zusatzstoffe aufweisen, die als Echtheitsmerkmale dienen. Dabei ist in erster Linie an Lumineszenzstoffe zu denken, die im sichtbaren Wellenlängenbereich vorzugsweise transparent sind und im nicht sichtbaren Wellenlängenbereich durch ein geeignetes Hilfsmittel, z. B. eine UV- oder IR-Strahlung emittierende Strahlungsquelle, angeregt werden können, um eine sichtbare oder zumindest mit Hilfsmitteln detektierbare Lumineszenz zu erzeugen. Auch andere Sicherheitsmerkmale können mit Vorteil eingesetzt werden, sofern sie die Betrachtung des erfindungsgemäßen Sicherheitselements nicht oder zumindest nicht wesentlich beeinträchtigen.

Die Erfindung enthält weiter einen Datenträger, insbesondere Markenartikel, Wertdokument oder dergleichen, der mit einem Sicherheitsmerkmal der oben beschriebenen Art oder einem Sicherheitselement der oben beschriebenen Art ausgestattet ist.

Durch die vorgeschlagenen Maßnahmen werden durch die vollständige laserinduzierte Entfernung von Kern und Hülle der Kern-Hülle-Teilchen Lasermarkierungen mit hohem Kontrast erzeugt. Die Ablation der Teilchen erfordert nur eine geringe Laserenergie und es besteht eine geringe Gefahr des Schwärzens bzw. Karbonisierens der Bindemittelmatrix des Markierungsstoffs.

Weitere Ausführungsbeispiele sowie Vorteile der Erfindung werden nachfolgend anhand der Figuren erläutert. Zur besseren Anschaulichkeit wird in den Figuren auf eine maßstabs- oder proportionsgetreue Darstellung verzichtet.

Es zeigen:
- Fig. 1: eine schematische Darstellung einer Banknote mit einem erfindungsgemäßen, lasermarkierten Sicherheitselement,
- Fig. 2: eine Ausgestaltung von Kern-Hülle-Teilchen nach einem Ausführungsbeispiel der Erfindung,
- Fig. 3: eine genauere Darstellung des lasermarkierten Sicherheitselements der Fig. 1,
- Fig. 4: ein Kern-Hülle-Teilchen nach einem anderen Ausführungsbeispiel der Erfindung, eingebettet in die Bindemittelmatrix eines Markierungsstoffs,
- Fig. 5: ein Kern-Hülle-Teilchen nach einem weiteren Ausführungsbeispiel der Erfindung, und
- Fig. 6: eine schematische Darstellung einer Schichtenfolge eines markierten erfindungsgemäßen Sicherheitselementes im Querschnitt.

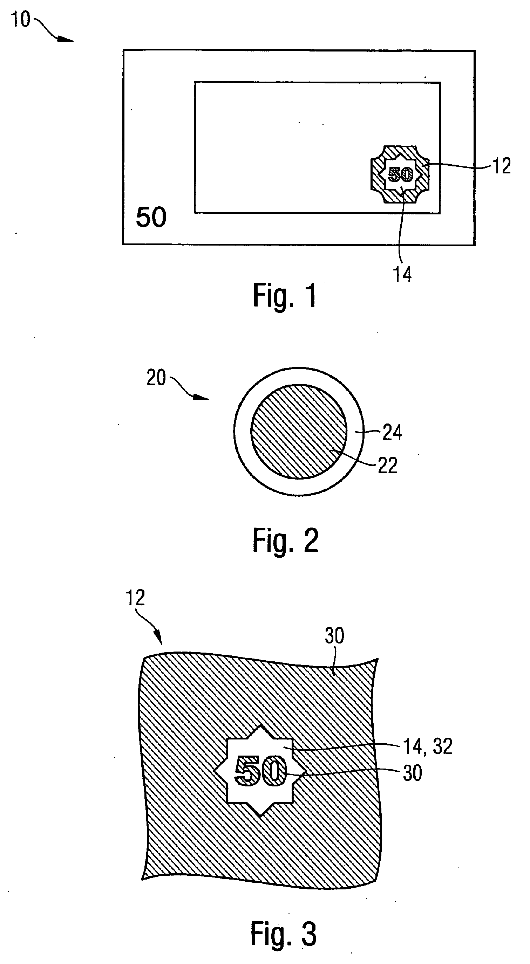

Die Erfindung wird nun am Beispiel einer Banknote erläutert. Fig. 1 zeigt dazu eine schematische Darstellung einer Banknote 10, die mit einem erfindungsgemäßen lasermarkierten Sicherheitselement 12 ausgestattet ist.

Für die Markierung mit einem Markierungslaser, beispielsweise einem Nd:YAG-Laser einer Wellenlänge von 1,064 µm, enthält das Sicherheitselement 12 zumindest einen lasermarkierbaren, bindemittelhaltigen Markierungsstoff mit einem Bunt- und/ oder Lumineszenzstoff. Durch die Laserbeaufschlagung wird der Bunt- und/ oder Lumineszenzstoff aus dem Markierungsstoff entfernt (ablatiert), so dass ein sich farblich oder, im Fall eines Lumineszenzstoffes, durch seine Lumineszenzeigenschaften unterscheidender Markierungsbereich 14 in dem Sicherheitselement 12 geschaffen wird.

Mit Bezug auf die Darstellung der Fig. 2 liegt der Bunt- oder Lumineszenzstoff dabei in der Hülle 24 von Kern-Hülle-Teilchen 20 vor, die in einen bindemittelhaltigen Markierungsstoff eingebettet sind. Die Kern-Hülle-Teilchen 20 umfassen jeweils einen Kern 22, der einen Infrarot-Absorber enthält, und eine Hülle 24 mit oder aus einem Bunt- oder Lumineszenzstoff, die die Strahlung des im infraroten Spektralbereich emittierenden Markierungslasers nicht absorbiert.

Um die laserinduzierte Entfernung der Kern-Hülle-Teilchen 20 aus dem umgebenden Markierungsstoff zu fördern, ist die Hülle 24 aus einem sublimationsfähigen Bunt- oder Lumineszenzstoff mit einer Sublimationstemperatur von weniger als 220 °C gebildet. Bei der Lasermarkierung wird nach gegenwärtigem Verständnis die Infrarotstrahlung des Markierungslasers von dem Infrarot-Absorber des Kerns 22 absorbiert und die aufgenommene Laserenergie in Wärme umgewandelt. Durch die resultierende Temperaturerhöhung wird die Sublimationstemperatur des Bunt- oder Lumineszenzstoffs der Hülle 24 überschritten und dieser dadurch vollständig aus dem Bindemittel des Markierungsstoffs entfernt. Auf diese Weise wird ein hoher Farb- oder Lumineszenz-Kontrast zwischen dem laserbeaufschlagten Markierungsbereich 14 und den nicht beaufschlagten Bereichen sichergestellt.

Als Infrarot-Absorber für den Kern 22 können dabei beispielsweise die Farbstoffe mit der Bezeichnung ADS990MC oder ADS1065A der American Dye Source eingesetzt werden. Der Farbstoff ADS990MC mit der Zusammensetzung C₃₂H₃₀N₂S₄Ni hat ein Absorptionsmaximum im nahen Infrarot bei 990 nm, der Farbstoff ADS1065A mit der Zusammensetzung C₆₂H₉₂N₆F₁₂Sb₂ hat in Methanol ein Absorptionsmaximum bei 1060 nm.

Als sublimationsfähige Bunt- oder Lumineszenzstoffe kommen sowohl Pigmente als auch Farbstoffe infrage. Insbesondere kommen Pigmente oder Farbstoffe der Substanzklassen der Anthrachinonderviate, der Anthracenderivate, wie etwa 9,10-Dimethylanthracen, der Azofarbstoffe, der Azomethinfarbstoffe, wie etwa PY 129, der Stilbenfarbstoffe, wie etwa Direct Yellow 11 oder Direct Yellow 4, der Chinophthalonfarbstoffe, wie etwa PY 138, der Coumarine, wie etwa Coumarin 120, der β-Naphthole, wie etwa Pigment Orange 5, der Monoazopigmente, wie etwa Pigment Yellow 1, 3,13, 74,111, der Anthrachinone, wie etwa Pigment Red 177, und der Naphthole AS, wie etwa Red 146, in Betracht.

Auch folgenden Substanzen stellen Beispiele für erfindungsgemäß einsetzbare sublimationsfähige Farbstoffe dar: Phenylamide der 1-Phenylazo-2-hydroxynaphthalin-3-carbonsäure, deren Phenylreste übliche Substituenten, vorzugsweise stickstofffreie Substituenten aufweisen, Phenyl- oder Naphthylamide der Aceto- oder Benzoylessigsäure, deren Phenylkerne ebenfalls übliche Substituenten aufweisen können, Diphenylaminoanthrachinone mit üblichen Substituenten in den Phenylkernen, 1,4-Diaminoanthrachinon-2,3-carbonsäurealkylimide, deren Alkylkette einen oder zwei Phenylkerne aufweist, 1-Benzoylaminoanthrachinonfarbstoffe, die eine Phenylaminogruppe in 4- oder 5-Stellung aufweisen und deren Phenylkerne übliche Substituenten enthalten können, sowie Monoazofarbstoffe mit einem Phenoxy-CH₂-, Phenoxy-CO- oder Phenoxy-CO-O-Substituenten.

Weitere Beispiele für sublimierte Farbstoffe sind:
Gelb: PTY-52, Macrotex Yellow, Phoron Brillant Yellow 6GL;
Rot: MS Red G, Macrotex Red Violet R, Ceres Red 7B, Samaron Red HBSL, Sk Rubinee SGL;
Blau: Kayaset Blue 714, Waxoline Blue AP-FW, Phoron Brillant Blue s-R, MS Blue 100, Direct Blue No. 1.

Weiter kommen Transferfarbstoffe in Betracht, wie etwa für die Farbe Gelb: o-(p-o-(p'-Acetaminophenylazo)-p-kresol, Hydroxychinophthalon und sein Bromderivat, 4-(o'-Nitro-p'-methyl-phenylazo)-3-methy-1-5-pyrazolon; für die Farbe Rot: 2-Methoxy-, 2-Phenoxy- oder 2-Hydroxy athoxy-4-hydroxy-1-aminoanthrachinon, 1,4-Diamino-2 methoxyanthrachinon; für die Farbe Blau: 1-Amino-4-phenylamino-anthrachinon, 1-Amino-2-cyano-4-phenylamino-anthrachinon, 1-Amino-2-cyano-4-athylamino-anthrachinon, 1,5-Dihydroxy-4-amino-8-isopropylamino- anthrachinon, Mono- und Dibromdiaminoanthrarafin; und für die Farbe Violett: 1-Anilino- oder 1-Toluidino-4-hydroxyanthrachinon.

Es versteht sich, dass die genannten sublimationsfähigen Bunt- oder Lumineszenzstoffe lediglich nicht beschränkende Beispiele darstellen. Besonders gut geeignete Bunt- oder Lumineszenzstoffe weisen eine gute chemische Beständigkeit und eine hohe Lichtechtheit auf. Die Lichtechtheit ist dabei ein Maß für die Farbechtheit von Färbungen, Farbstoffen und Drucken gegen die Bleichwirkung des Tageslichts. Die europäische Norm EN ISO 105 B01 beschreibt die Bestimmung der Farbechtheit nach der 8-stufigen Wollskala, die von einer sehr geringen Lichtechtheit (Lichtechtheitstyp 1) bis zu einer hervorragenden Lichtechtheit (Lichtechtheitstyp 8) reicht. Eine Erhöhung um eine Stufe entspricht dabei einer doppelt so guten Lichtbeständigkeit. Eine hohe Lichtechtheit bedeutete dabei im Rahmen der vorliegenden Anmeldung eine Lichtechtheit von 3 oder mehr, 4 oder mehr, 5 oder mehr oder sogar von 6 oder mehr auf der 8-stufigen Wollskala.

Die Hülle 24 kann in einem Sol-Gel-Verfahren, mittels Emulsionspolymerisation (Emulgieren wasserunlöslicher Monomere mithilfe von Emulgatoren in Wasser und Polymerisieren unter Verwendung wasserlöslicher Initiatoren), Sprüh-Coating-Verfahren oder Plasmatechnologien auf den Kern aufgebracht werden.

Fig. 3 zeigt das in Fig. 1 auf der Banknote 10 dargestellte Sicherheitselement 12 nach der Lasermarkierung genauer. Das lasermarkierte Sicherheitselement 12 enthält erste Bereiche, in denen der lasermarkierbare Markierungsstoff 30 nicht mit Strahlung des Markierungslasers beaufschlagt wurde, und in denen die Kern-Hülle-Teilchen daher noch im Markierungsstoff 30 vorliegen. Der optische Eindruck der ersten Bereiche wird daher durch den absorbierenden Kern 22 und/ oder die Bunt- oder Lumineszenzstoffe der Hülle 24 der Kern-Hülle-Teilchen geprägt.

Neben den nicht beaufschlagten ersten Bereichen enthält das Sicherheitselement 12 zweite Bereiche 14, in denen die Kern-Hülle-Teilchen aus dem Markierungsstoff 30 entfernt wurden und in denen nunmehr der lasermarkierte Markierungsstoff 32 vorliegt. Wie in Fig. 3 angedeutet, bildet der zweite Bereich 14 mit dem lasermarkierten Markierungsstoff 32 typischerweise einen farblosen Markierungsbereich 14 innerhalb der farbigen oder lumineszierenden ersten Bereiche. Im Ausführungsbeispiel der Fig. 3 bildet der Markierungsbereich 14 die Ziffernfolge "50", die der Denomination der in Fig. 1 dargestellten Banknote 10 entspricht.

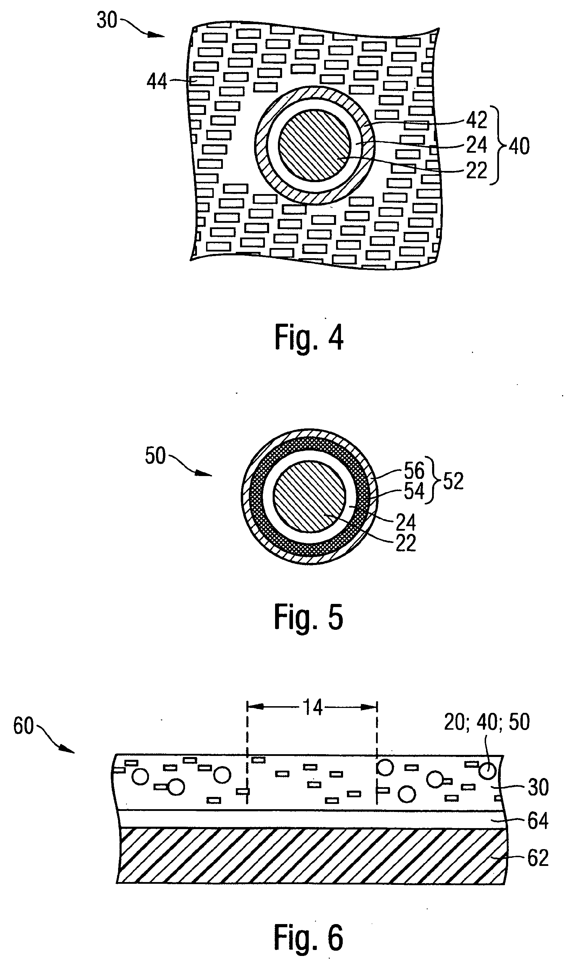

Mit Bezug auf die Fig. 4 kann die laserinduzierte Entfernung von Kern-Hülle-Teilchen 40 aus einem bindemittelhaltigen Markierungsstoff 30 weiter erleichtert werden, indem die Hülle 24 der Kern-Hülle-Teilchen 20 mit einer ablationsfördernden Funktionsschicht 42 umgeben wird, die bei Bestrahlung der eingebetteten Kern-Hülle-Teilchen 40 die Bindungsstärke zwischen den Kern-Hülle-Teilchen 40 und dem einbettenden Bindemittel 44 reduziert.

Ohne an eine bestimmte Erklärung gebunden sein zu wollen, wird gegenwärtig vermutet, dass die Hülle herkömmlicher Kern-Hülle-Teilchen eine stark zerklüftete Oberfläche aufweist, so dass diese Kern-Hülle-Teilchen nach einer Einbettung in einen bindemittelhaltigen Markierungsstoff mit einer hohen Bindungsstärke in dem Bindemittel verankert sind. Durch diese starke Verankerung kann es bei der Lasermarkierung zu einer physikalischen Trennung von Kern und Hülle kommen, so dass die Hülle nicht oder nicht vollständig aus der Bindemittelmatrix 44 entfernt wird. Sie verbleibt dann zumindest teilweise in der Bindemittelmatrix 44 und führt so zu einer unerwünschten, unvollständigen Laserablation der Kern-Hülle-Teilchen.

Durch die in Weiterbildungen der Erfindung vorgesehene zusätzliche Funktionsschicht 42 wird nach gegenwärtigem Verständnis der Einfluss des Bindemittels verringert, die Adhäsion des Bindemittels 44 zum Kern-Hülle-Teilchen 40 reduziert und so die vollständige Entfernung der Kern-Hülle-Teilchen bei der Lasermarkierung erleichtert.

Es sei betont, dass die in dieser Anmeldung vorgeschlagenen Erklärungsansätze und Mechanismen der erhöhten Ablationsfähigkeit nach gegenwärtigem Kenntnisstand zwar plausible Erklärungen darstellen, sie jedoch keinen Anspruch auf Vollständigkeit oder Korrektheit erheben. Insbesondere ist die Kenntnis oder gar die Korrektheit der vorgeschlagenen Erklärungsansätze für die Ausführung der Erfindung nicht erforderlich.

Die zusätzliche Funktionsschicht 42 kann aus einem niedrigschmelzenden Material mit einer Schmelztemperatur im Bereich von 50 °C bis 250 °C, bevorzugt 50 °C bis 220 °C gebildet sein. Als niedrigschmelzende Materialien kommen sowohl organische Verbindungen als auch anorganische Verbindungen in Betracht. Organische Verbindungen sind beispielsweise Carnauba-Wachs mit einer Schmelztemperatur zwischen 80 °C und 87 °C, Hartparaffin (Paraffinum durum) mit einer Schmelztemperatur zwischen 50 °C und 60 °C, Stearin mit einer Schmelztemperatur zwischen 60 °C und 70 °C, weißes Bienenwachs (Cera alba) mit einer Schmelztemperatur zwischen 62 °C und 65 °C, oder andere gesättigte höhere Fettsäuren sowie Polyethylen mit einer Schmelztemperatur zwischen 90 °C und 125 °C, und copolymere Verbindungen, wie Acrylnitril-Butadien-Styrol-Copolymerisat (ABS) mit einer Schmelztemperatur zwischen 85 °C und 100 °C, und Styrol-Acrylnitril (SAN) mit einer Schmelztemperatur von ca. 250 °C. Geeignete anorganische Verbindungen für die Funktionsschicht 42 sind beispielsweise MgCl*6H₂O mit einer Schmelztemperatur von 117 °C, Mg(NO₃)₂*6H₂O mit einer Schmelztemperatur von 89 °C, CH₃COONa*3H₂O mit einer Schmelztemperatur von 58 °C oder MgCl₂*6H₂O/Mg(NO₂)₂*6H₂O mit einer Schmelztemperatur von 58 °C.

Das erleichterte Herauslösen der mit einer niedrigschmelzenden Funktionsschicht 42 versehenen Kern-Hülle-Teilchen 40 verläuft nach gegenwärtigem, nicht einschränkendem Verständnis wie folgt: Bei der Beaufschlagung des Markierungsstoffs 30 mit einem IR-Markierungslaser wird die einfallende Strahlung von dem im Kern 22 des Kern-Hülle-Teilchens 40 enthaltenen IR-Absorber absorbiert und die aufgenommene Laserenergie in Wärme umgewandelt. Die im Kern 22 entstehende Wärme wird über die Hülle 24 auf die niedrigschmelzende Funktionsschicht 42 übertragen. Durch die resultierende Temperaturerhöhung wird der Schmelzpunkt der Funktionsschicht 42 überschritten und sie beginnt zu schmelzen und sich in das Bindemittel 44 hinein auszudehnen.

Durch die Verflüssigung und Ausdehnung der Funktionsschicht 42 wird eine niedrige Bindungsstärke zwischen dem Inneren 22, 24 des Kern-Hülle-Teilchens und der umgebenden Bindemittelmatrix 44 erreicht, so dass Kern 22 und Hülle 24 des Kern-Hülle-Teilchens leicht aus dem Markierungsstoff 30 herausgelöst werden können. Die Ursache für die leichtere Ablation kann nach gegenwärtigem Verständnis als ein "Kohäsionsbruch" innerhalb der Funktionsschicht 42 betrachtet werden, bei dem durch die Erwärmung die Wechselwirkung der Funktionsschichtmoleküle geschwächt wird, so das ein Teil dieser Moleküle über Adhäsionskräfte mit den Bindemittelmolekülen wechselwirkt und in der Bindemittelmatrix verbleibt, während ein anderer, kleinerer Teil über Adhäsionskräfte mit der Hülle 24 des Kern-Hülle-Teilchens wechselwirkt und durch die zugeführte Laserenergie zusammen mit Kern und Hülle des Kern-Hülle-Teilchens aus dem Markierungsstoff 30 herausgelöst wird. Nach dem Herauslösen aus dem Markierungsstoff 30 werden die Kern-Hülle-Teilchen 22,24 mit einer geeigneten Absaugvorrichtung abgesaugt und so bleibend von der Oberfläche des Markierungsbereichs entfernt.

Zwischen Kern 22 und Hülle 24 und/ oder zwischen Hülle 24 und der ablationsfördernden Funktionsschicht 42 kann optional eine anorganische oder organische Schicht zur Stabilisierung der Kern-Hülle-Teilchen 20 (Fig. 2), 40 (Fig. 4) oder 50 (Fig. 5) angeordnet sein.

Mit Bezug auf Fig. 5 kann die Funktionsschicht 52 statt durch ein niedrigschmelzendes Material auch aus einer mit einer niedrigsiedenden Flüssigkeit 54 gefüllten Polymerkapsel 56 gebildet sein. Dabei schwimmt das "bloße" Kern-Hülle-Teilchen 22, 24 in der Flüssigkeit 54 und ist von der Polymerkapsel 56 als einer zusätzlichen Hülle umgeben. Flüssigkeit 54 und Polymerkapsel 56 zusammen bilden dabei die Funktionsschicht 52. Bei der Lasermarkierung wird nach gegenwärtigem Verständnis die Flüssigkeit 54 durch die im Kern 22 absorbierte Laserstrahlung erhitzt, und die umgebende Polymermatrix 56 zerplatzt aufgrund des hohen Dampfdrucks innerhalb der Kapsel 56.

Eine solche Polymerkapsel 56 kann beispielsweise aus Gelatine, aus Gummi Arabicum, aus Polysacchariden, insbesondere aus Seegras-Polysacchariden wie Alginate, Carragenaan, Agar oder Pektin, aus Polyamiden, aus Polyurethanen, aus Polyester, aus Polysulfonamiden, aus Polysulfonaten oder aus Polyurea gebildet sein.

Für die niedrigsiedende Flüssigkeit 54 kommen vorzugsweise Flüssigkeiten mit einem Siedepunkt unterhalb von 120 °C in Betracht, insbesondere Wasser, Alkohole wie Propanol oder Butanol, Alkane wie n-Heptan oder n-Octan, Ester wie etwa Essigsäurebutylester sowie allgemein organische Lösungsmittel mit einem Siedepunkt von etwa 100 °C. Die niedrigsiedende Flüssigkeit 54 wird dabei vorzugsweise auf die eingesetzten Materialien für die Hülle 24 und die Polymerkapsel 56 abgestimmt.

Statt mit einer Flüssigkeit kann die Polymerkapsel 56 auch mit einem Gas 54 gefüllt sein. Bei der Lasermarkierung wird dann das Prinzip der "expandierenden Hülle" genutzt, bei dem die im Kern 22 absorbierte Laserstrahlung das eingeschlossene Gas 54 erhitzt, welches sich ausdehnt, die Kapsel 56 aufweitet und schließlich bei genügend starker Aufweitung zerstört.

Für das eingeschlossene Gas kommt dabei beispielsweise Isobutan oder Isopentan infrage. Die Polymerkapsel besteht in dieser Variante beispielsweise aus einem Polyblend aus Acrylnitril-Copolymeren (thermoplastisch, gasdurchlässig) und Melaminharzen (duroplastisch), wobei der Anteil des Polymers in dem Polyblend wenige ppm bis etwa 50 Gew.-% beträgt.

Fig. 6 zeigt eine Schichtenfolge eines erfindungsgemäßen, bereits markierten Sicherheitselementes 60 schematisch im Querschnitt. Dabei wurde auf ein Substrat 62 zunächst eine Hilfsschicht 64 und ein lasermarkierbarer Markierungsstoff 30 der oben beschriebenen Art aufgebracht. Die Hilfsschicht 64 führt zu einer (weiteren) Reduktion der Bindungsstärke zwischen den Kern-Hülle-Teilchen 20, 40 oder 50 des lasermarkierbaren Markierungsstoffs 30 und dem Substrat 62. Die Hilfsschicht 64 kann, wie in Fig. 6, vollflächig oder auch partiell auf dem Substrat 62 angeordnet sein. Sie kann visuell nicht sichtbar, visuell sichtbar, beispielsweise bunt, oder mit zusätzlichen Merkmalsstoffen, beispielsweise Lumineszenz-Pigmenten, versehen sein.

Um die Bindungsstärke zwischen den Kern-Hülle-Teilchen und dem Substrat weiter zu reduzieren, kann die Hilfsschicht 64 eine Adhäsion zu dem lasermarkierbaren Markierungsstoff 30 aufweisen, die geringer ist als die Adhäsion zwischen der Hilfsschicht 64 und dem Substrat 62. In einem konkreten Ausführungsbeispiel weist die Hilfsschicht 64 beispielsweise eine Oberflächenspannung von 32 mN/m, und der Markierungsstoff 30, in den die Kern-Hülle-Teilchen 20, 40 oder 50 eingebettet sind, eine Oberflächenspannung von 36 mN/m auf.

Alternativ kann die Hilfsschicht 64 aus einem niedrigschmelzenden Material mit einer Schmelztemperatur zwischen 50 °C und 250 °C gebildet sein. Bevorzugt kann dazu Carnauba-Wachs mit einer Schmelztemperatur zwischen 80 °C und 87 °C verwendet werden.

Die Hilfsschicht 64 kann auch ein Bindemittel und niedrigschmelzende Materialien enthalten, die ein spezifisches Gewicht und eine Oberflächenspannung aufweisen, die geringer sind als das spezifische Gewicht und die Oberflächenspannung eines Bindemittels der Hilfsschicht 64. Bei einer Wärmeübertragung von den absorbierenden Teilen der Kern-Hülle-Teilchen 20,40 oder 50 zu den niedrigschmelzenden Materialien in der Hilfsschicht 64 neigen diese zum dann Aufschwimmen und lagern sich an der Grenzschicht zwischen der Hilfsschicht 64 und dem Markierungsstoff 30 an.

In einer weiteren Alternative kann das Sicherheitselement 60 eine Hilfsschicht 64 umfassen, die einen IR-Absorber enthält. Der IR-Absorber, dessen Absorptionseigenschaften auf die Wellenlänge des Markierungslasers abgestimmt ist, heizt sich bei Bestrahlung mit dem Markierungslaser auf und kann zu einer Ablösung der Teile des Markierungsstoffs 30, die unmittelbar oberhalb der bestrahlten Bereiche der Hilfsschicht 64 angeordnet sind, führen oder zumindest die Adhäsion zwischen der Hilfsschicht 64 und dem Markierungsstoff 30 reduzieren und dadurch die Ablation der Kern-Hülle-Teilchen erleichtern.

Bei einem Substrat 62, das aus Papier gebildet ist, kann die Hilfsschicht 64 auch die spezifische Oberfläche des Substrats 62 durch Verschließen der Kapillare auf der Oberfläche des Substrats 62 reduzieren. Durch die Reduktion der spezifischen Oberfläche wird das Substrat 62 geglättet, so dass die Adhäsion zwischen dem Substrat 62 und dem Markierungsstoff 30 und dadurch die physikalische Verankerung des Markierungsstoffs auf dem Substrat reduziert wird.

Die Hilfsschicht 64 kann vor dem Aufbringen des Markierungsstoffs 30 auf dem Substrat beispielsweise über ein Flexodruckverfahren, Siebdruckverfahren oder Offsetdruckverfahren auf das Substrat 62 aufgebracht werden.

Nach dem Aufbringen von Hilfsschicht 64 und Markierungsstoff 30 wird das so gebildete lasermarkierbare Sicherheitsmerkmal in dem Markierungsbereich 14 mit Strahlung eines Markierungslasers beaufschlagt, um dort die Kern-Hülle-Teilchen 20, 40 oder 50 aus dem Markierungsstoff 30 zu entfernen. Dadurch entsteht ein lasermarkiertes Sicherheitselement 60 mit einem Markierungsbereich 14, in dem die Kern-Hülle-Teilchen vollständig aus dem Markierungsstoff 30 herausgelöst sind, wie in den Figuren 3 und 6 illustriert.

## Patentansprüche

1. Kern-Hülle-Teilchen, insbesondere zur Einbettung in einen bindemittelhaltigen Markierungsstoff für den Sicherheitsdruck, mit einem einen Infrarot-Absorber enthaltenden Kern und einer den Kern umgebenden Hülle, **dadurch gekennzeichnet, dass** die Hülle des Kern-Hülle-Teilchens einen sublimationsfähigen Bunt- und/oder Lumineszenzstoff mit einer Sublimationstemperatur von weniger als 220 °C enthält.

2. Kern-Hülle-Teilchen nach Anspruch 1, **dadurch gekennzeichnet, dass** der Bunt- und/oder Lumineszenzstoff eine hohe Lichtechtheit und/oder eine hohe chemische Beständigkeit aufweist.

3. Kern-Hülle-Teilchen nach Anspruch 1 oder 2, **dadurch gekennzeichnet, dass** der Bunt- und/oder Lumineszenzstoff auf der 8-stufigen Wollskala eine Lichtechtheit von 3 oder mehr, vorzugsweise von 5 oder mehr aufweist.

4. Kern-Hülle-Teilchen nach wenigstens einem der Ansprüche 1 bis 3, **dadurch gekennzeichnet, dass** der Bunt- und/oder Lumineszenzstoff eine Sublimationstemperatur zwischen 100 °C und 200 °C, besonders bevorzugt zwischen 120 °C und 150 °C aufweist.

5. Kern-Hülle-Teilchen nach wenigstens einem der Ansprüche 1 bis 4, **dadurch gekennzeichnet, dass** die Hülle des Kern-Hülle-Teilchens von einer ablationsfördernden Funktionsschicht umgeben ist, die bei Bestrahlung des in einen bindemittelhaltigen Markierungsstoff eingebetteten Kern-Hülle-Teilchens mit einem Markierungslaser die Bindungsstärke zwischen dem Kern-Hülle-Teilchen und dem einbettenden Bindemittel reduziert, um die laserinduzierte Entfernung des Kern-Hülle-Teilchens aus dem Markierungsstoff zu fördern.

6. Kern-Hülle-Teilchen nach Anspruch 5, **dadurch gekennzeichnet, dass** die Funktionsschicht aus einem verdampfungsfähigen oder sublimationsfähigen Material mit einer Verdampfungs- bzw. Sublimationstemperatur von weniger als 250 °C, bevorzugt von weniger als 200 °C, besonders bevorzugt von weniger als 150 °C gebildet ist.

7. Kern-Hülle-Teilchen nach Anspruch 5 oder 6, **dadurch gekennzeichnet, dass** die Funktionsschicht aus einer mit einer niedrigsiedenden Flüssigkeit gefüllten Polymerkapsel gebildet ist, und/oder dass die Funktionsschicht aus einer gasgefüllten Polymerkapsel gebildet ist.

8. Kern-Hülle-Teilchen nach wenigstens einem der Ansprüche 1 bis 7, **dadurch gekennzeichnet, dass** zwischen Kern und Hülle und/oder zwischen Hülle und Funktionsschicht eine anorganische oder organische Schicht zur Stabilisierung des Kern-Hülle-Teilchens angeordnet ist.

9. Verfahren zur Herstellung eines Kern-Hülle-Teilchens nach wenigstens einem der Ansprüche 1 bis 8, bei dem ein einen Infrarot-Absorber enthaltendes Material mit einem Material verkapselt wird, das einen sublimationsfähigen Bunt- und/oder Lumineszenzstoff enthält, dessen Sublimationstemperatur unterhalb von 220 °C liegt.

10. Verfahren nach Anspruch 9, **dadurch gekennzeichnet, dass** der mit dem sublimationsfähigen Bunt- und/oder Lumineszenzstoff verkapselte Infrarot-Absorber mit einer ablationsfördernden Funktionsschicht umgeben wird, die bei Bestrahlung des in einen bindemittelhaltigen Markierungsstoff eingebetteten Kern-Hülle-Teilchens mit einem Markierungslaser die Bindungsstärke zwischen dem Kern-Hülle-Teilchen und dem einbettenden Bindemittel reduziert, um die laserinduzierte Entfernung des Kern-Hülle-Teilchens aus dem Markierungsstoff zu fördern.

11. Verfahren nach Anspruch 9 oder 10, **dadurch gekennzeichnet, dass** der mit dem sublimationsfähigen Bunt- und/oder Lumineszenzstoff verkapselte Infrarot-Absorber mit einer mit einer niedrigsiedenden Flüssigkeit oder einem Gas gefüllten Polymerkapsel umgeben wird unter Anwendung eines Verfahrens, ausgewählt aus der Gruppe Koarzervierung, Polymerisation/Polykondensation, in-situ-Polymerisation, Emulsion-Diffusion-Technik und Miniemulsions-Polymerisation.

12. Lasermarkierbares Sicherheitsmerkmal zur Absicherung von Wertgegenständen, **dadurch gekennzeichnet, dass** das Sicherheitsmerkmal einen lasermarkierbaren bindemittelhaltigen Markierungsstoff mit Kern-Hülle-Teilchen nach wenigstens einem der Ansprüche 1 bis 8 enthält und insbesondere als Druckfarbe, Beschichtung oder Lack ausgebildet ist.

13. Lasermarkierbares Sicherheitselement zur Absicherung von Wertgegenständen, **dadurch gekennzeichnet, dass** auf einem Substrat ein lasermarkierbares Sicherheitsmerkmal nach Anspruch 12 angeordnet ist, wobei bevorzugt eine Hilfsschicht zwischen dem Substrat und dem lasermarkierbares Sicherheitsmerkmal angeordnet ist, die die Bindungsstärke zwischen den Kern-Hülle-Teilchen des lasermarkierbaren Markierungsstoffs und dem Substrat reduziert.

14. Verfahren zur Herstellung eines lasermarkierten Sicherheitselements zur Absicherung von Wertgegenständen, bei dem ein lasermarkierbares Sicherheitsmerkmal nach Anspruch 12 auf ein Substrat aufgebracht und in einem Markierungsbereich mit Strahlung eines Markierungslasers beaufschlagt wird, um in dem Markierungsbereich die Kern-Hülle-Teilchen aus dem lasermarkierbaren Markierungsstoff zu entfernen, wobei bevorzugt vor dem Aufbringen des lasermarkierbaren Sicherheitsmerkmals eine Hilfsschicht auf dem Substrat aufgebracht wird, die die Bindungsstärke zwischen den Kern-Hülle-Teilchen des lasermarkierbaren Markierungsstoffs und dem Substrat reduziert.

15. Sicherheitspapier für die Herstellung von Sicherheits- und Wertdokumenten, wie Banknoten, Schecks, Ausweiskarten, Urkunden oder dergleichen, oder Datenträger, insbesondere Markenartikel, Wertdokumente und dergleichen, das/ der mit einem Sicherheitsmerkmal nach Anspruch 12, einem Sicherheitselement nach Anspruch 13, oder einem nach Anspruch 14 herstellbaren Sicherheitselement ausgestattet ist.

## Claims

1. A core-shell particle, especially for embedding in a binder-containing marking substance for security printing, having a core that includes an infrared absorber, and a shell that surrounds the core, **characterized in that** the shell of the core-shell-particle includes a sublimatable colored and/or luminescent substance having a sublimation temperature of less than 220°C.

2. The core-shell particle according to claim 1, **characterized in that** the colored and/ or luminescent substance has a high light fastness and/ or a high chemical stability.

3. The core-shell particle according to claim 1 or 2, **characterized in that** the colored and/or luminescent substance has a light fastness of 3 or more, preferably of 5 or more on the 8-step wool scale.

4. The core-shell particle according to at least one of claims 1 to 3, **characterized in that** the colored and/or luminescent substance has a sublimation temperature between 100°C and 200°C, particularly preferably between 120°C and 150°C.

5. The core-shell particle according to at least one of claims 1 to 4, **characterized in that** the shell of the core-shell particle is surrounded by an ablation-promoting functional layer that, when the core-shell particle that is embedded in a binder-containing marking substance is irradiated with a marking laser, reduces the binding strength between the core-shell particle and the embedding binder to promote the laser-induced removal of the core-shell particle from the marking substance.

6. The core-shell particle according to claim 5, **characterized in that** the functional layer is formed from a vaporizable or sublimatable material having a vaporization or sublimation temperature of less than 250°C, preferably of less than 200°C, particularly preferably of less than 150°C.

7. The core-shell particle according to claim 5 or 6, **characterized in that** the functional layer is formed from a polymer capsule filled with a low-boiling liquid, and/or **in that** the functional layer is formed from a gas-filled polymer capsule.

8. The core-shell particle according to at least one of claims 1 to 7, **characterized in that** an inorganic or organic layer is arranged between the core and the shell and/ or between the shell and the functional layer to stabilize the core-shell particle.

9. A method for manufacturing a core-shell particle according to at least one of claims 1 to 8, in which a material including an infrared absorber is encapsulated with a material that includes a sublimatable colored and/or luminescent substance whose sublimation temperature lies below 220°C.

10. The method according to claim 9, **characterized in that** the infrared absorber encapsulated with the sublimatable colored and/or luminescent substance is surrounded by an ablation-promoting functional layer that, when the core-shell particle that is embedded in a binder-containing marking substance is irradiated with the marking laser, reduces the binding strength between the core-shell particle and the embedding binder to promote the laser-induced removal of the core-shell particle from the marking substance.

11. The method according to claim 9 or 10, **characterized in that** the infrared absorber encapsulated with the sublimatable colored and/or luminescent substance is surrounded by a polymer capsule filled with a low-boiling liquid or a gas using a method selected from the group coacervation, polymerization/ polycondensation, in-situ-polymerization, emulsion-diffusion technique and mini-emulsion polymerization.

12. A laser-markable security feature for securing valuable articles, **characterized in that** the security feature includes a laser-markable, binder-containing marking substance having core-shell particles according to at least one of claims 1 to 8 and especially is developed as a printing ink, coating or lacquer.

13. A laser-markable security element for securing valuable articles, **characterized in that** a laser-markable security feature according to claim 12 is arranged on a substrate, there preferably being arranged between the substrate and the laser-markable security feature an auxiliary layer that reduces the binding strength between the core-shell particles of the laser-markable marking substance and the substrate.

14. A method for manufacturing a laser-marked security element for securing valuable articles, in which a laser-markable security feature according to claim 12 is applied to a substrate and, in a marking region, is impinged on with the radiation of a marking laser to remove, in the marking region, the core-shell particles from the laser-markable marking substance, there preferably being applied to the substrate, before the application of the laser-markable security feature, an auxiliary layer that reduces the binding strength between the core-shell particles of the laser-markable marking substance and the substrate.

15. A security paper for the manufacture of security and value documents, such as banknotes, checks, identification cards, certificates or the like, or data carriers, especially branded articles, value documents and the like, that is furnished with a security feature according to claim 12, a security element according to claim 13, or a security element manufacturable according to claim 14.

## Revendications

1. Particule à noyau et enveloppe, en particulier pour être noyée dans une substance de marquage contenant un liant pour une impression de sécurité, avec un noyau contenant un absorbeur d'infrarouges et une enveloppe entourant le noyau,
**caractérisée en ce que** l'enveloppe de la particule à noyau et enveloppe contient une substance multicolore et/ou luminescente à capacité de sublimation avec une température de sublimation inférieure à 220°C.

2. Particule à noyau et enveloppe selon la revendication 1, **caractérisée en ce que** la substance multicolore et/ou luminescente présente une stabilité élevée à la lumière et/ou une résistance chimique élevée.

3. Particule à noyau et enveloppe selon la revendication 1 ou 2, **caractérisée en ce que** la substance multicolore et/ou luminescente présente, sur l'échelle de laine bleue à 8 niveaux, une stabilité à la lumière de 3 ou plus, de préférence de 5 ou plus.

4. Particule à noyau et enveloppe selon l'une au moins des revendications 1 à 3, **caractérisée en ce que** la substance multicolore et/ou luminescente présente une température de sublimation comprise entre 100°C et 200°C, de manière particulièrement préférée, entre 120°C et 150°C.

5. Particule à noyau et enveloppe selon l'une au moins des revendications 1 à 4, **caractérisée en ce que** l'enveloppe de la particule à noyau et enveloppe est entourée par une couche fonctionnelle favorisant l'ablation laquelle, lors de l'irradiation avec un laser de marquage de la particule à noyau et enveloppe noyée dans une substance de marquage contenant un liant, réduit la force de liaison entre la particule à noyau et enveloppe et le liant noyant afin de favoriser l'élimination induite par laser de la particule à noyau et enveloppe de la substance de marquage.

6. Particule à noyau et enveloppe selon la revendication 5, **caractérisée en ce que** la couche fonctionnelle est formée par une matière à capacité d'évaporation ou à capacité de sublimation avec une température d'évaporation ou de sublimation de moins de 250°C, de préférence de moins de 200°C, de manière particulièrement préférée, de moins de 150°C.

7. Particule à noyau et enveloppe selon la revendication 5 ou 6, **caractérisée en ce que** la couche fonctionnelle est formée par une capsule de polymère remplie d'un liquide à bas point d'ébullition, et/ou **en ce que** la couche fonctionnelle est formée par une capsule de polymère remplie de gaz.

8. Particule à noyau et enveloppe selon l'une au moins des revendications 1 à 7, **caractérisée en ce que**, entre le noyau et l'enveloppe et/ou entre l'enveloppe et la couche fonctionnelle, une couche inorganique ou organique pour la stabilisation de la particule à noyau et enveloppe est disposée.

9. Procédé pour la fabrication d'une particule à noyau et enveloppe selon l'une au moins des revendications 1 à 8, dans lequel une matière contenant un absorbeur d'infrarouges est encapsulée avec une matière contenant une substance multicolore et/ou luminescente à capacité de sublimation dont la température de sublimation est inférieure à 220°C.

10. Procédé selon la revendication 9, **caractérisé en ce que** l'absorbeur d'infrarouges encapsulé avec la substance multicolore et/ou luminescente à capacité de sublimation est entouré d'une couche fonctionnelle favorisant l'ablation laquelle, lors de l'irradiation avec un laser de marquage de la particule à noyau et enveloppe noyée dans une substance de marquage contenant un liant, réduit la force de liaison entre la particule à noyau et enveloppe et le liant noyant afin de favoriser l'élimination induite par laser de la particule à noyau et enveloppe de la substance de marquage.

11. Procédé selon la revendication 9 ou 10, **caractérisé en ce que** l'absorbeur d'infrarouges encapsulé avec la substance multicolore et/ou luminescente à capacité de sublimation est entouré par une capsule de polymère remplie avec un liquide à bas point d'ébullition ou avec un gaz en utilisant un procédé sélectionné dans le groupe formé par une coacervation, une polymérisation/polycondensation, une polymérisation in situ, une technique d'émulsion/diffusion et une polymérisation par mini-émulsion.

12. Elément caractéristique de sécurité pouvant être marqué au laser pour sécuriser des objets de valeur, **caractérisé en ce que** l'élément caractéristique de sécurité contient une substance de marquage contenant un liant pouvant être marquée au laser avec des particules à noyau et enveloppe selon l'une au moins des revendications 1 à 8, et est en particulier réalisé en tant que couleur d'impression, revêtement ou vernis.

13. Elément de sécurité pouvant être marqué au laser pour la sécurisation d'objets de valeur, **caractérisé en ce que** l'on dispose sur un substrat un élément caractéristique de sécurité pouvant être marqué au laser selon la revendication 12, dans lequel on dispose de préférence une couche auxiliaire entre le substrat et l'élément caractéristique de sécurité pouvant être marqué au laser, laquelle réduit la force de liaison entre les particules à noyau et enveloppe de la substance de marquage pouvant être marquée au laser et le substrat.

14. Procédé pour la fabrication d'un élément de sécurité marqué au laser pour la sécurisation d'objets de valeur, dans lequel un élément caractéristique de sécurité pouvant être marqué au laser selon la revendication 12 est appliqué sur un substrat et est soumis, dans une zone de marquage, à un rayonnement d'un laser de marquage afin d'éliminer, dans la zone de marquage, les particules à noyau et enveloppe de la substance de marquage pouvant être marquée au laser, dans lequel, de préférence avant l'application de l'élément caractéristique de sécurité pouvant être marqué au laser, une couche auxiliaire est appliquée sur le substrat, laquelle réduit la force de liaison entre les particules à noyau et enveloppe de la substance pouvant être marquée au laser et le substrat.

15. Papier de sécurité pour la fabrication de documents de sécurité et de valeur, tels des billets de banque, chèques, cartes d'identité, actes ou similaires, ou bien support de données, en particulier article de marque, documents de valeur et similaires, lequel est doté d'un élément caractéristique de sécurité selon la revendication 12, d'un élément de sécurité selon la revendication 13 ou d'un élément de sécurité pouvant être fabriqué selon la revendication 14.
